# EUROPEAN PATENT SPECIFICATION

(11) **EP 1 621 673 B1**
(45) Date of publication and mention of the grant of the patent: **02.11.2011**
(21) Application number: 05076501.5
(22) Date of filing: 30.06.2005
(51) Int. Cl.: E04F 15/02

(54) **Floor construction**
Fussbodenkonstruktion
Revêtement de sol

(30) Priority: 30.07.2004 NL 1026750
(43) Date of publication of application: 01.02.2006
(73) Proprietor: Pooltechnics B.V., 5145 PE WAALWIJK (NL)
(72) Inventor: De Jong, Leonardus Johannes, 5152 RX Drunen (NL)
(74) Representative: Griebling, Onno

(56) References cited:
- EP-A- 0 436 523
- EP-A- 0 454 663
- EP-A- 0 457 944
- DE-A1- 3 041 624
- DE-A1- 4 445 157
- DE-A1- 10 127 709
- DE-U1- 29 607 834
- FR-A- 1 586 890
- US-A- 4 921 741

## Description

The present invention relates in general to a construction for a floor provided with a heat exchanger. More particularly, the present invention relates to a floor that can be walked on, and that is usable for practising sports such as volleyball, tennis, etc.

European patent 0.454.663 describes a floor construction comprising a large number of mutually parallel, tubular flow channels, that may be made of an EPDM-rubber. Through the flow channels, a hot or cold fluid may be led, in order to supply or remove heat, depending on the desired thermal effect. In order to turn the flow channels into a floor on which one can walk and play, the publication describes that the flow channels are embedded into a granular, India rubber-like material or EPDM-rubber, which granules are bound together by a binding agent, for example a polyurethane adhesive. Embedding occurs by applying to the basis a pasty mixture of the granulate with binding agent, pressing the flow channels into it, and then smearing the pasty mixture over it, after which still a compacting step is needed.

A great disadvantage of this is the way in which this floor has to be manufactured. The floor has to be manufactured in situ, and that is only possible at suitable weather conditions. In manufacturing, the workmen have to deal with mixtures that contain solvents, with which health aspects are associated. Handling the mixtures, in particular applying the top layer, is specialistic work, and has to be performed by people especially trained for that work. The attained quality of the final floor depends on the craftsmanship of the people concerned.

Further, it is a disadvantage that the thus manufactured floor is inextricably fixed to the basis. Therefore, it is not possible in a simple way to alter the properties of the floor. For an alteration of the use of the floor, for example if it is intended that another sport has to be practised, it may be desired to give the floor another colour, another roughness, etc. Moreover, it may be desired that such a change is only temporary. In the case of the known floor, it is only possible to remove and replace the floor as a whole, or to apply another top layer over the existing top layer.

European patent 0.436.523 describes a floor construction that also comprises a system of mutually parallel hoses, mutually connected to each other by transverse connecting pieces ("Stege"). The hoses are embedded in a filler, that extends to above the hoses and thus forms a flat top surface. The filler is so elastic that the whole of the hose packet and the filler is reliable.

Relative to European patent 0.454.663, the construction as described in European patent 0.436.523 perhaps offers the advantage that the application to a floor is simplified. However, it is a disadvantage that the filler forms a whole with the hose packet, and that an alteration of the properties of the floor surface can only be achieved by removing and replacing the floor as a whole, or by applying another top layer over the existing top layer.

A further disadvantage of the floor construction described in European patent 0.436.523 relates to the lateral stability. The hose packet with the filler is manufactured at a particular width. When a large surface has to be covered, several of such packets have to be laid next to each other. The different packets may then shift relative to each other, and further attachment means are needed in order to counteract this.

A floor construction with the features of the preamble of claim 1 is disclosed in document DE-10127 709-A. The present invention aims at overcoming the said disadvantages.

More particularly, the present invention aims at providing a floor construction according to claim 1 which combines the advantages of the techniques as described in the said patents with the advantages of an easy applying, and the advantages of a flexible use by an easy replacement of the top layer.

To that end, the present invention provides a tile-shaped floor element, at its bottom side provided with a profile matching the profile of a hose packet that is usable as heat exchanger. The tile-shaped floor element is preferably rigid, but elastic enough to give way somewhat if someone is walking on it.

The tile-shaped floor element can be applied easily by pressing its profiled bottom side into the hose packet; just as easily, the element can be removed in order to be replaced by another floor element with other properties, in which case the hose packet may then be left lying.

The tile-shaped floor element may be manufactured in various desired forms and sizes, so that it is also possible to lay patterns with it. For example, the floor element may be rectangular or even square, hexagonal, etc. The tile-shaped floor element may be relatively small, but it may also have a width that is larger than the width of a hose packet, whereby it also functions as horizontal coupling element.

These and other aspects, features and advantages of the present invention will be further explained by the following description with reference to the drawings, in which same reference numbers indicate same or similar parts, and in which:
the figures 1A-C schematically show cross sections of a part of a heat exchanger;
figure 2 is a schematic cross section showing multiple heat exchanger packets next to each other;
figure 3A is a schematic perspective view of a tile-shaped floor element according to the present invention;
figure 3B shows a cross section of a part of the floor element of figure 3A on larger scale;
figure 4 is a schematic cross section of a part of a floor construction according to the present invention;
figure 5 is a schematic perspective view illustrating the combination of a relatively large floor tile with multiple relatively small heat exchangers;
   and the figures 6A-D are detail views schematically illustrating embodiments of coupling members of floor tiles.

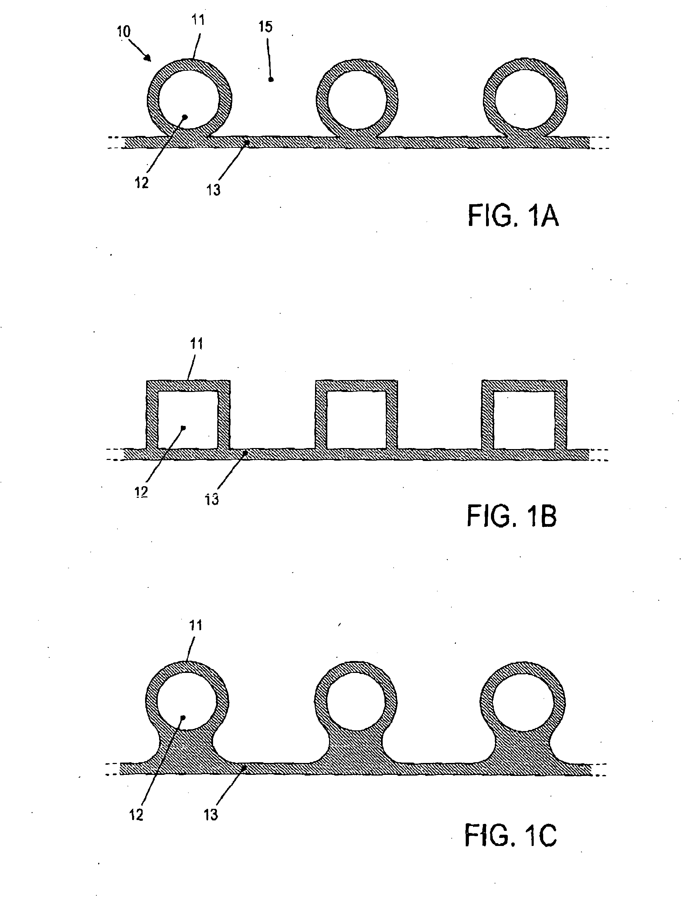

Figure 1A schematically shows a cross section of a part of a heat exchanger, usable in combination with a floor element as will be discussed later. The heat exchanger 10 comprises flexible tubes 11, of which only three are shown in figure 1A. Each tube 11 comprises an internal flow channel 12, through which a hot or cold liquid can flow. The tubes 11 are coupled to each other in lateral direction by means of transverse connecting pieces 13. Intermediate spaces between the tubes 11 are indicated at 15.

The embodiment as illustrated in figure 1A is known per se in practice. In that case, the tubes 11 have a substantially circular contour, and the connecting pieces 13 extend tangentially relative to the tubes 11. However, the present invention is not limited to such a configuration. Figure 1B illustrates that the tubes 11 may have a rectangular cross section. Figure 1C illustrates that the tubes 11 may be lying elevated relative to the transverse connecting pieces 13.

In the illustrated examples, the heat exchanger 10 has a flat bottom surface, defined by the transverse connecting pieces 13, wherein the tubes 11 are situated completely at the top side of the transverse connecting pieces 13. However, the transverse connecting pieces 13 may be situated on a higher level, for example being directed radially relative to the tubes 11, in which case the tubes 11 thus project outside the connecting pieces 13 at the bottom side as well.

In the known heat exchanger, the transverse connecting pieces 13 extend over the full longitudinal direction of the tubes 11. However, the present invention is not limited thereto: it is possible that the transverse connecting pieces 13 are discontinuous in the longitudinal direction, and are for example provided with holes or interruptions, which is however not illustrated for the sake of simplicity.

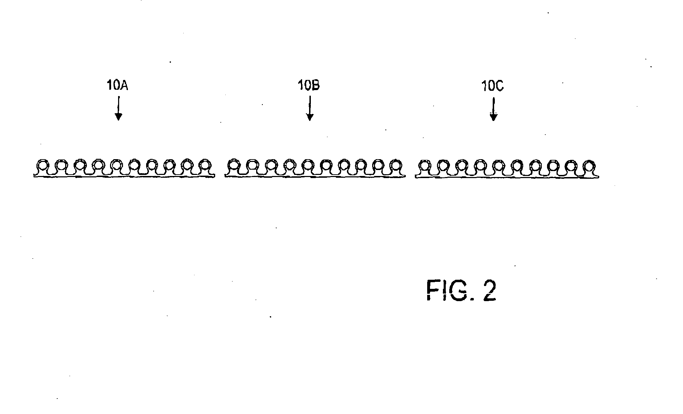

Preferably, the heat exchanger 10 is made of an elastic material, such as for example EPDM-rubber, so that the heat exchanger 10 is rollable. When applying to a floor, the rolled- up heat exchanger 10 is then rolled out and laid down on the basis concerned. Therein, the heat exchanger 10 has a predetermined width, defined by a predetermined number of tubes 11 next to each other. If the basis to be covered is larger than this width, multiple heat exchangers 10 are laid down next to each other, as illustrated schematically in figure 2. By way of example, it is assumed that a heat exchanger 10 exists of a system of ten tubes 11 next to each other; figure 2 illustrates three of such packets next to each other, wherein the different packets are indicated as 10A, 10B, and 10C, respectively.

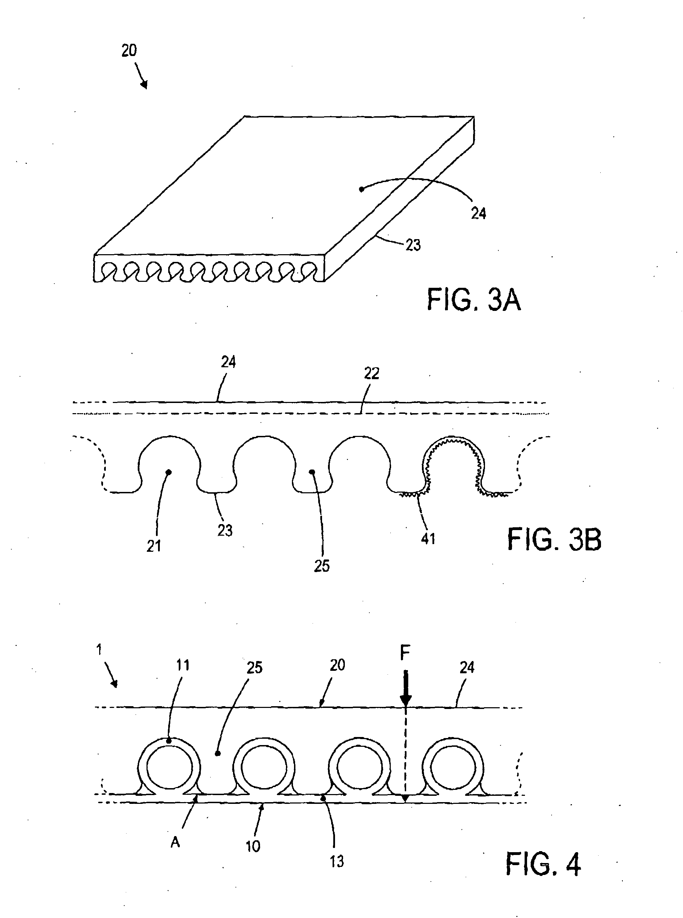

Figure 3A is a schematic perspective view of a tile-shaped floor element 20 according to the present invention, and figure 3B shows a cross section of a part of that floor element 20 on larger scale. The tile-shaped floor element, which has a square contour in figure 3A, but which may alternatively have for example a rectangular contour, a hexagonal contour, etc., has a bottom surface 23 and a top surface 24. At its bottom side, the tile-shaped floor element 20 is provided with a corrugated profile, i.e. elongated groove-shaped recesses 21 are arranged at the bottom side, extending from the bottom surface 23 in the direction of the top surface 24. Those grooves 21 serve as accommodation space for a tube 11 of a heat exchanger 10, and therefore have a contour adapted to the contour of such a tube 11. Between those accommodation spaces 21, the tile-shaped floor element 20 has carrying ribs 25 extending over the full height of the top surface 24 towards the bottom surface 23.

Figure 4 is a schematic cross section of a part of a floor construction 1 according to the present invention, and shows a tile-shaped floor element 20 arranged on a heat exchanger 10. The tubes 11 of the heat exchanger 10 are accommodated in the accommodation spaces 21 of the floor element 20, and the carrying ribs 25 of the floor element 20 extend in the intermediate spaces 15 between the tubes 11 of the heat exchanger 10.

The contour of the accommodation space 21 and the height of the carrying ribs 25 of the floor element 20 are chosen such that, in the situation of figure 4, where the floor element 20 is arranged on a corresponding heat exchanger 10, the bottom surface 23 of the floor element 20, and thus the bottom surface of the carrying ribs 25, supports on the top surface of the connecting pieces 13 between the tubes 11. Hereby, it is achieved that a pressure force exerted on the top surface 24 of the floor element 20, as schematically indicated at the arrow F, is directly passed on to the basis (not shown in the figures for the sake of simplicity) by the carrying ribs 25 and the connecting pieces 13, whereby pinching of the tubes 11 at such a load is counteracted as much as possible.

The contour of the carrying ribs 25 does not have to be exactly equal to the contour of the intermediate spaces 15 between the tubes 11. For example, it is shown in figure 4 at the arrow A that the maximum width of the carrying ribs 25 may be smaller than the maximum width of the intermediate spaces 15. It is preferable, though, that the maximum width of the carrying ribs 25 is larger than the minimum width of the intermediate spaces 15, as also illustrated in figure 4, so that a shape-tight locking comes into being.

It is further illustrated in figure 4 that the accommodation space 21 may fit tightly around the tube 11, which is preferred because of the thereby achieved good heat transfer between the heat exchangers 10 and the floor elements 20. However, that too is not necessary. For example, it is very well conceivable that, at the top side of the tube 11, a gap is situated between the tube 11 and the top surface of the accommodation space 21. Such a gap may fulfil several functions. On the one hand, such a gap may compensate for possible dimensional tolerances and dimensional differences between the tubes 11 and the accommodation spaces 21. On the other hand, such a gap makes sure that the top surface 24 of the tile-shaped floor element 20 can be impressed a little without the tube 11 necessarily also being impressed. More particularly, it can be ensured hereby that vertical pressure forces (arrow F in figure 4) are led to a basis by the carrying ribs 25 while the tubes 11 are not or hardly loaded.

It is preferred that the width of the carrying ribs 25 at the height corresponding to the maximum width of the tubes 11 is chosen such that the tubes 11 are supported on both sides by carrying ribs 25, which further impedes possible impressing of the tubes 11 as a result of a pressure force exerted on the surface 24.

Applying the floor system 1 according to the present invention to a basis is very easy. First, the heat exchangers 10 are laid down next to each other, as sketched in figure 2. Then, the tile-shaped floor elements are laid on the heat exchangers 10 and pressed, wherein the situation illustrated in figure 4 is reached. Obviously, as many heat exchangers 10 and tile-shaped floor elements 20 are arranged as is needed to cover the desired ground surface. Essentially, the floor is then ready. In that case, the tile-shaped floor elements offer a walkable floor which is in good thermal contact with the heat exchanger 10. The top surface 24 of the tiles 20 is closed, and is chosen to have properties which fit the aimed application, for example in relation to colour, roughness, etc.

Further, it is very easy, if desired, to take one or more tiles away and to replace them by other tiles. For example repair of the floor in case of damaged tiles can thus be performed quickly and relatively cheaply. It may also be desired to change the application of the floor, to which end the tiles can be replaced by similar tiles with other properties.

The tile-shaped floor elements may in principle be manufactured of any material. Depending on the intended application, the floor elements 20 according to the present invention may for example be manufactured of a hard material, such as for example a hard synthetic material, wood, aluminium, concrete, etc. Preferably however, the floor elements are somewhat elastic, to which end they may be manufactured of a rubber material. The floor elements may for example be cut out of solid rubber, but preferably, the floor elements are manufactured by pressing rubber granules, for example EPDM-rubber, together with a suitable binding agent into a mould with the correct design. With such a pressing process, it is possible to obtain strong floor elements. By a suitable preparation of the corresponding wall of the mould, desired surface effects of the top surface 24 can be achieved. One may choose to finish the top surface 24 smooth, but one may also provide the top surface 24 with a particular corrugated pattern or the like, for increasing the roughness. If desired, it is also possible to provide the top surface 24 with decorative patterns, a logo, etc.

Preferably, the tile shaped floor elements have an open structure, in such a way that the tiles enable drainage of moisture lying or falling on it (rain water).

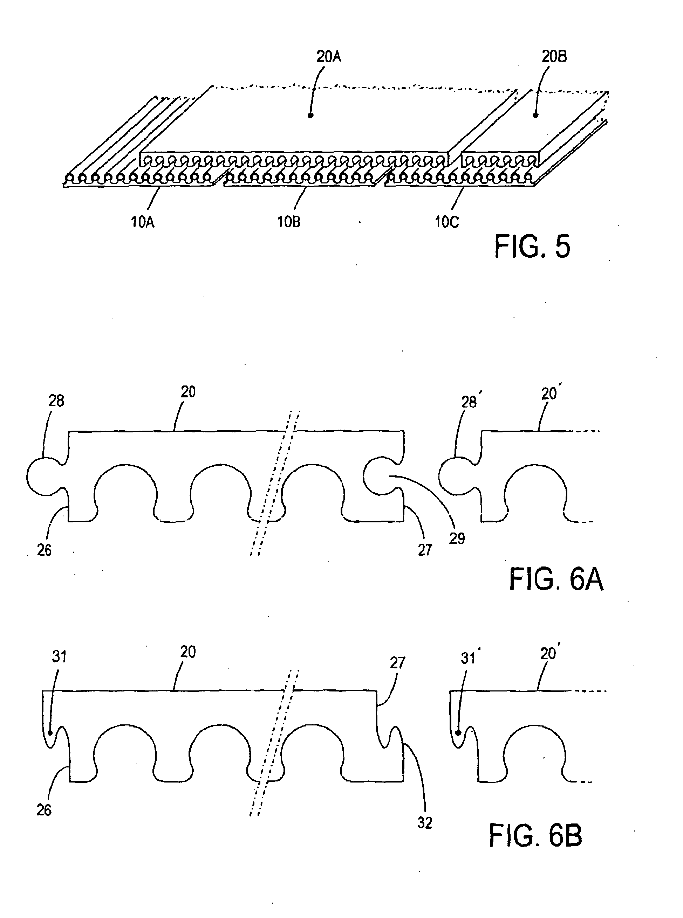

A tile-shaped floor element may have a transverse dimension smaller than the transverse dimension of the heat exchanger 10. Two or more floor elements 20 are then arranged next to each other on a single heat exchanger 10. Preferably however, the tile-shaped floor element 20 has a width that is considerably larger than the width of a heat exchanger 10. Advantageously, the width of a floor element 20 corresponds to an integral number of times the width of the heat exchanger 10, wherein this number may be equal to 2, 3, 4, 5, etc. Figure 5 is a schematic perspective view illustrating that a single floor element 20A then extends over multiple heat exchangers 10 and thus also functions as horizontal coupling element between adjacent heat elements 10.

Figure 5 also illustrates that in practice it is then possible that use is made of floor elements 20B with a smaller width along the edge of the floor, to cover the last part of the last heat exchanger 10C.

It is noted that the function of horizontal coupling elements may also be achieved in cases wherein the width of the tiles 20 is smaller than or equal to the width of the heat exchangers 10.

In a further elaboration, the tile-shaped floor elements 20 are further provided with coupling members to couple the floor elements 20 to each other in horizontal direction. The figures 6A and 6B are schematic cross sections of a floor element illustrating two different embodiments of such coupling members.

A tile-shaped floor element 20 has two side edges 26 and 27 situated opposite each other. In the embodiment illustrated in figure 6A, the one side edge 26 is provided with at least one coupling projection 28, and the opposite side edge 27 is provided with at least one corresponding coupling recess 29 in which the coupling projection 28' of another, similar tile 20' fits. The shape of the coupling projections 28 and the coupling recesses 29 are chosen such that a shape-tight force-transmitting connection comes into being, as will be clear to a person skilled in the art.

Figure 6B shows a variation, wherein the side edges 26 and 27 have a meandering contour and thus define hook-shaped coupling members 31 and 32. The side edge 26 has a hook-shaped coupling member 31 directed downward, and the opposite side edge 27 has a hook-shaped coupling member 32 directed upward. Also in this case, the coupling members 31', 32 of adjacent tiles 20', 20 can cooperate with each other in order to counteract a horizontal relative displacement of tiles 20.

An advantage of the variation of figure 6B relative to the variation of figure 6A is that the second tile 20' can be arranged and can be brought into engagement with the first tile 20 by a vertical movement.

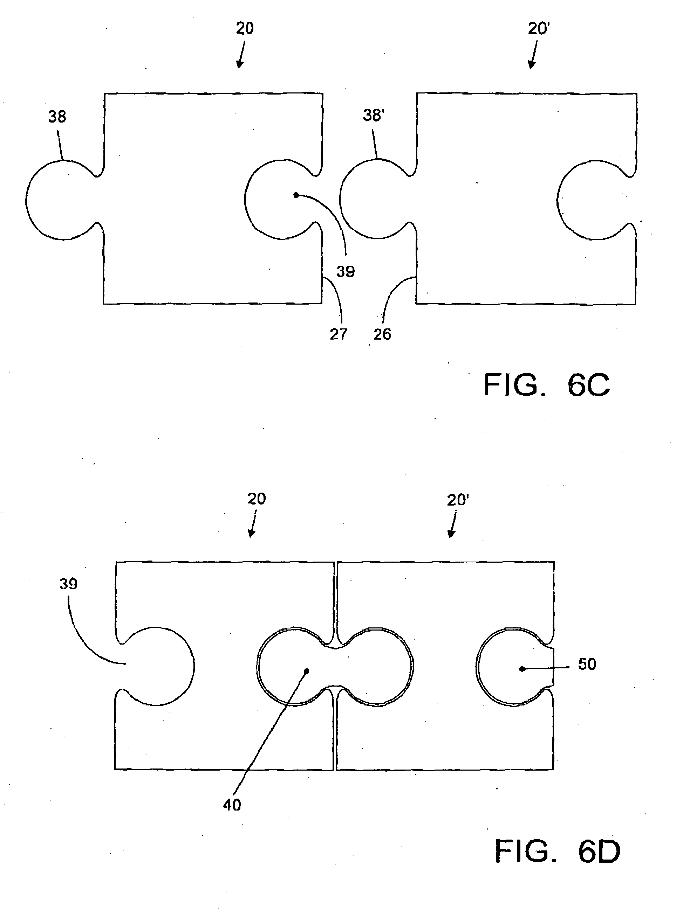

Figure 6C is a schematic top view of parts of two tiles 20 and 20' for illustrating another embodiment of such coupling members. Also in this case, the one side edge 26 is provided with at least one coupling projection 38, and the opposite side edge 27 is provided with at least one corresponding coupling recess 39, in which the coupling projection 38' of the other, similar tile 20' fits. Relative to the embodiment of figure 6A, the coupling projections and the coupling recesses are rotated over 90°, so that in top view, the tiles 20, 20' have the contour of puzzle pieces fitting into each other.

In figure 6C, the dimensions of the coupling projections and the coupling recesses are chosen relatively large in comparison to the dimensions of the tiles 20, 20'. Obviously, the dimensions of the coupling projections and the coupling recesses may be chosen considerably smaller: in a practical embodiment, the tiles may have dimensions in the order of for example approximately 50 - 100 cm, and the coupling projections and the coupling recesses may have dimensions in the order of 5 cm or less. However, it is also possible that the coupling projections and the coupling recesses have substantial dimensions indeed, as shown in figure 6C, because the accommodation spaces 21 may also extend through the coupling projections 38.

An advantage of the variation of figure 6C relative to the variation of figure 6B is that the second tile 20' may be arranged and may be brought into engagement with all its neighbouring tiles 20 by a vertical movement. Taking away and replacing a single tile is then easier.

Figure 6D is a schematic top view of parts of two tiles 20 and 20', similar to figure 6C, for illustrating another embodiment of such coupling members. In this case, the tiles 20, 20' are always only provided with recesses 39, 39' situated opposite each other. Preferably, the tiles 20 are now symmetrical for rotation over 180°. In order to mutually couple tiles 20 and 20', loose coupling pieces 40 are provided, on both ends provided with a thickening 41, 42, fitting in the respective recesses 39, 39'. In relation to the dimensions and the accommodation spaces 21, the same applies as what has been mentioned in relation to figure 6C.

For the purpose of edge finishing, filling pieces 50 may be provided, which may be considered as "half" coupling piece 40, with a contour corresponding to the contour of the recesses 39, as also illustrated in figure 6D.

It will be clear to a person skilled in the art that still several other shape variation are possible for the coupling members 28 and 29 or 31 and 32 or 38 and 39.

In a preferred embodiment, the tile-shaped floor elements are provided with metal particles, for example in the form of granules, fibres, rods, etc. Such metal particles will increase the heat transferring capacity between the heat exchanger 10 and the top surface 24 of the floor elements 20.

Further, the floor elements 20 may be provided with a metal gauze between the accommodation spaces 21 and the top surface 24. Such a metal gauze, schematically indicated by the dotted line 22 in figure 3B, results in an increased mechanical strength of the floor elements 20.

In a further preferred embodiment, the tile-shaped floor element 20 is provided with an easily deformable layer at its bottom side, for example a resin layer, as schematically indicated at 41 in figure 3B. The tiles 20 may also be provided with such a layer directly prior to placing a tile 20 on a heat exchanger 10. Such a layer 41 provides a better filling of possible hollow spaces between the tile 20 and the heat exchanger 10 and thereby a better contact and thus a better heat transfer between the heat exchanger 10 and the floor element 20.

It will be clear to a person skilled in the art that the invention is not limited to the exemplary embodiments discussed in the preceding, but that several variations and modifications are possible within the protective scope of the invention as defined in the attached claims.

For example, it is possible that the described floor tiles are applied in conjunction with heat exchanger tubes which lack the transverse connecting pieces 13. In such a case, the carrying ribs 25 will directly support on the basis.

Further, it is for example possible to apply the metal particles described before and/or the metal gauze described before in floor constructions with heat exchanger elements 10, onto which a walkable layer is applied in the form of a pasty mass that subsequently cures.

## Claims

1. Floor construction (1), comprising:
- a plurality of heat exchangers (10; 10A, 10B, 10C) arranged next to each other, each heat exchanger comprising a system of mutually substantially parallel tubes (11) with always an intermediate space (15) between two adjacent tubes (11) of the heat exchangers
- a plurality of tile-shaped floor elements (20) arranged on the heat exchangers (10), each tile-shaped floor element (20) having a bottom surface (23) and a top surface (24), each floor element (20) at its bottom side being provided with elongated groove-shaped accommodation spaces (21) and with carrying ribs (25) between those accommodation spaces (21), the carrying ribs (25) extending over the full height from the top surface (24) towards the bottom surface (23);
wherein the tile-shaped floor elements (20) are removably arranged on the heat exchangers (10), the tubes (11) of the heat exchangers (10) being accommodated in the accommodation spaces (21) of the tile-shaped floor elements (20);
and wherein the carrying ribs (25) of the tile-shaped floor elements (20) are situated in the intermediate spaces (15) of the heat exchangers (10), wherein the maximum width of the carrying ribs (25) is larger than the minimum width of the intermediate spaces (15) **characterised in that** the tubes (11) are coupled to each other in lateral direction by means of transverse connecting pieces (13); and the bottom surface of a carrying rib (25) supports on the top surface of the connecting pieces (13) between the tubes (11), and **in that** the contour of the accommodation spaces (21) of the tile-shaped floor elements (20) corresponds to the contour of the tubes (11) of the heat exchangers (10) such that the accommodation spaces (21) fit tightly around the tubes (11).

2. Floor construction according to claim 1, wherein a tile-shaped floor element (20A) extends over at least a part of a first heat exchanger (10A) and at least a part of the adjacent heat exchanger (10B).

3. Floor construction according to claim 2, wherein a tile-shaped floor element (20) has a width that is larger than the width of a heat exchanger (10).

4. Floor construction according to claim 3, wherein the width of a floor element (20) corresponds to an integral number of times the width of the heat exchanger (10), wherein that number may be equal to 2, 3, 4, 5, etc.

5. Floor construction according to any of the previous claims, wherein the tubes (11) are made of an elastic material, such as for example EPDM-rubber.

6. Floor construction according to any of the previous claims, wherein the tile-shaped floor elements are manufactured of an elastic material, such as for example a rubber material, preferably an EPDM-rubber.

7. Floor construction according to any of the previous claims, wherein the tile-shaped floor elements are manufactured of solid rubber.

8. Floor construction according to any of the previous claims, wherein the tile-shaped floor elements are manufactured of rubber granules, for example EPDM-rubber, which together with a suitable binding agent are pressed in a mould with the correct design.

9. Floor construction according to any of the previous claims, wherein the tile-shaped floor elements are manufactured of a hard material, such as for example a hard synthetic material, wood, aluminium, concrete, etc.

10. Floor construction according to any of the previous claims, wherein the elongated groove-shaped recesses (21) of the tile-shaped floor elements have a smaller transverse dimension near the bottom surface (23) than at a higher level, and wherein the carrying ribs (25) have a larger transverse dimension near the bottom surface (23) than at a higher level.

11. Floor construction according to any of the previous claims, further comprising coupling members (28, 29; 31, 32; 38, 39; 40) for coupling the floor elements (20) to each other in horizontal direction.

12. Floor construction according to any of the previous claims, further provided with metal particles accommodated in the material of the floor elements, for example in the form of granules, fibres, rods, etc.

13. Floor construction according to any of the previous claims, wherein the tile-shaped floor elements are further provided with a metal gauze (22) between the accommodation spaces (21) and the top surface (24).

14. Floor construction according to any of the previous claims, wherein an easily deformable layer (41), for example a resin layer, is arranged at the bottom side of the floor elements.

15. Floor construction according to any of the previous claims, wherein the tile-shaped floor elements have an open structure for the purpose of drainage.

## Patentansprüche

1. Bodenaufbau (1), umfassend:
- eine Vielzahl von Wärmetauschern (10; 10A, 10B 10C), die nebeneinander angeordnet sind, wobei jeder Wärmetauscher ein System von im Wesentlichen gegenseitig parallelen Rohren (11) mit immer einem Zwischenraum (15) zwischen zwei benachbarten Rohren (11) umfasst;
- eine Vielzahl von fliesenförmigen Bodenelementen (20), die auf den Wärmetauschern (10) angeordnet sind, wobei jedes fliesenförmige Bodenelement (20) eine untere Fläche (23) und eine obere Fläche (24) aufweist und jedes Bodenelement (20) auf seiner Unterseite mit lang gestreckten nutförmigen Aufnahmeräumen (21) und mit Tragrippen (25) zwischen den Aufnahmeräumen (21) versehen ist, wobei die Tragrippen (25) sich über die gesamte Höhe von der oberen Fläche (24) bist zur unteren Fläche (23) erstrecken;
wobei die fliesenförmigen Bodenelemente (20) lösbar auf den Wärmetauschern (10) angeordnet sind, wobei die Rohre (11) der Wärmetauscher (10) in den Aufnahmeräumen (21) der fliesenförmigen Bodenelemente (20) aufgenommen sind;
und wobei die Tragrippen (25) der fliesenförmigen Bodenelemente (20) in den Zwischenräumen (15) der Wärmetauscher (10) untergebracht sind, wobei die maximale Breite der Tragrippen (25) größer ist als die minimale Breite der Zwischenräume (15), **dadurch gekennzeichnet, dass** die Rohre (11) der Wärmetauscher in Querrichtung mittels querverlaufender Verbindungsstücke (13) aneinander gekoppelt sind und die untere Fläche einer Tragrippe (25) sich auf der oberen Fläche der Verbindungsstücke (13) zwischen den Rohren (11) abstützt und **dadurch**, dass die Kontur der Aufnahmeräume (21) der fliesenförmigen Bodenelemente (20) der Kontur der Rohre (11) der Wärmetauscher (10) entspricht, so dass die Aufnahmeräume (21) enganliegend um die Rohre (11)passen.

2. Bodenaufbau nach Anspruch 1, **dadurch gekennzeichnet, dass** ein fliesenförmiges Bodenelement (20A) sich über mindestens einen Teil eines ersten Wärmetauschers (10A) und über mindestens einen Teil des angrenzenden Wärmetauschers (10B) erstreckt.

3. Bodenaufbau nach Anspruch 2, **dadurch gekennzeichnet, dass** ein fliesenförmiges Bodenelement (20) eine Breite aufweist, die größer als die Breite eines Wärmetauschers (10) ist.

4. Bodenaufbau nach Anspruch 3, **dadurch gekennzeichnet, dass** die Breite eines Bodenelementes (20) einem ganzzahligen Vielfachen der Breite des Wärmetauschers (10) entspricht, wobei das Vielfache gleich 2, 3, 4, 5, etc. sein kann.

5. Bodenaufbau nach einem der vorhergehenden Ansprüche, **dadurch gekennzeichnet, dass** die Rohre (11) aus einem elastischen Material wie beispielsweise EPDM-Gummi hergestellt sind.

6. Bodenaufbau nach einem der vorhergehenden Ansprüche, **dadurch gekennzeichnet, dass** die fliesenförmigen Bodenelemente aus einem elastischen Material hergestellt sind, beispielsweise einem Gummimaterial, vorzugsweise einem EPDM-Gummi.

7. Bodenaufbau nach einem der vorhergehenden Ansprüche, **dadurch gekennzeichnet, dass** die fliesenförmigen Bodenelemente aus Vollgummi hergestellt sind.

8. Bodenaufbau nach einem der vorhergehenden Ansprüche, **dadurch gekennzeichnet, dass** die fliesenförmigen Bodenelemente aus Gummi-Granulat hergestellt sind, beispielsweise EPDM-Gummi, das zusammen mit einem geeigneten Bindemittel in eine Form mit dem korrekten Design gepresst ist.

9. Bodenaufbau nach einem der vorhergehenden Ansprüche, **dadurch gekennzeichnet, dass** die fliesenförmigen Bodenelemente aus einem harten Material hergestellt sind, beispielsweise aus einem harten Kunststoff, Holz, Aluminium, Beton, etc.

10. Bodenaufbau nach einem der vorhergehenden Ansprüche, **dadurch gekennzeichnet, dass** die gestreckten nutförmigen Aufnahmeräume (21) der fliesenförmigen Bodenelemente ein kleineres Quermaß nahe der unteren Fläche (23) als auf einer höheren Ebene haben, und dass die Tragrippen (25) ein größeres Quermaß nahe der unteren Fläche (23) als auf einer höheren Ebene haben.

11. Bodenaufbau nach einem der vorhergehenden Ansprüche, ferner umfassend Kopplungsteile (28; 29; 31; 32; 38; 39; 40), um die Bodenelemente (20) in horizontaler Richtung miteinander zu koppeln.

12. Bodenaufbau nach einem der vorhergehenden Ansprüche, ferner versehen mit Metallpartikeln, die im Material der Bodenelemente aufgenommen sind, zum Beispiel in Form von Granulat, Fasern, Stäben etc.

13. Bodenaufbau nach einem der vorhergehenden Ansprüche, **dadurch gekennzeichnet, dass** die fliesenförmigen Bodenelemente ferner mit einem Metallgewebe (22) zwischen den Aufnahmeräumen (21) und der oberen Fläche (24) versehen sind.

14. Bodenaufbau nach einem der vorhergehenden Ansprüche, **dadurch gekennzeichnet, dass** eine leicht verformbare Schicht (41), beispielsweise eine Harzschicht, an der Unterseite der Bodenelemente angeordnet ist,

15. Bodenaufbau nach einem der vorhergehenden Ansprüche, **dadurch gekennzeichnet, dass** die fliesenförmigen Bodenelemente zwecks Entwässerung eine offene Struktur aufweisen.

## Revendications

1. Revêtement de sol (1) comprenant :
- une pluralité d'échangeurs de chaleur (10 ; 10A, 10B, 10C) placés les uns à côté des autres, chaque échangeur de chaleur comprenant un système de tubs mutuellement substantiellement parallèles (11) avec toujours un espace intermédiaire (15) entre deux tubes adjacents (11) ;
- une pluralité d'éléments de sol en forme de carreaux (20) placés sur les échangeurs de chaleur (10), chaque élément de sol en forme de carreau (20) ayant une surface inférieure (23) et une surface supérieure (24), chaque élément de sol (20) étant pourvu dans sa partie inférieure d'espaces de logement en forme de rainures allongées (21) et de nervures porteuses (25) entre ces espaces de logement (21), les nervures porteuses (25) s'étendant sur toute la hauteur, de la surface supérieure (24) vers le surface inférieure (23) ;
dans lequel les éléments de sol en form de carreaux (20) sont placés de manière amovible sur les échangeurs de chaleur (10), les tubes (11) des échangeurs de chaleur (10) étant logés dans les espaces de logement (21) des éléments de sol en forme de carreaux (20) ;
et dans lequel les nervures porteuses (25) des éléments de sol en form de carreaux (20) sont situées dans les espaces intermédiaires (15) des échangeurs de chaleur (10), la largeur maximale des nervures porteuses (25) étant supérieure à la largeur minimale des espaces intermédiaires (15), **caractérisé en ce que** les tubes (11) des échangeurs de chaleur sont couplés les uns aux autres dans la direction latérale au moyen de pièces de connexion transversales (13) et la surface inférieure d'une nervure porteuse (25) porte sur la surface supérieure des pièces de connexion (13) entre les tubes (11), et **en ce que** le contour des espaces de logement (21) des éléments de sol en form de carreaux (20) correspond au contour des tubes (11) des échangeurs de chaleur (10), de sorte que les espaces de logement (21) s'adaptent de manière serrée autour des tubes (11).

2. Revêtement de sol selon la revendication 1, dans lequel un élément de sol en forme de carreau (20A) s'étend sur au moins une partie d'un premier échangeur de chaleur (10A) et au moins une partie de l'échangeur de chaleur adjacent (10B).

3. Revêtement de sol selon la revendication 2, dans lequel un élément de sol en forme de carreau (20) a une largeur qui est supérieure à la largeur d'un échangeur de chaleur (10).

4. Revêtement de sol selon la revendication 3, dans lequel la largeur d'un élément de sol (20) correspond à un nombre entier fois la largeur de l'échangeur de chaleur (10), dans lequel ce nombre peut être égal à 2, 3, 4, 5, etc.

5. Revêtement de sol selon l'une quelconque des revendications précédentes, dans lequel les tubes (11) sont faits d'un matériau élastique, comme par exemple un caoutchouc EPDM.

6. Revêtement de sol selon l'une quelconque des revendications précédentes, dans lequel les éléments de sol en forme de carreaux sont fabriqués à partir d'un matériau élastique, comme par exemple un matériau de type caoutchouc, de préférence un caoutchouc EPDM.

7. Revêtement de sol selon l'une quelconque des revendications précédentes, dans lequel les éléments de sol en forme de carreaux sont fabriqués en caoutchouc plein.

8. Revêtement de sol selon l'une quelconque des revendications précédentes, dans lequel les éléments de sol en forme de carreaux sont fabriqués à partir de granulés de caoutchouc, par exemple du caoutchouc EPDM, que l'on presse en même temps qu'un agent de liaison approprié dans un moule ayant le bon dessin.

9. Revêtement de sol selon l'une quelconque des revendications précédentes, dans lequel les éléments de sol en forme de carreaux sont fabriqués à partir d'un matériau dur, comme par exemple un matériau synthétique dur, du bois, de l'aluminium, du béton, etc.

10. Revêtement de sol selon l'une quelconque des revendications précédentes, dans lequel les évidements en forme de rainures allongées (21) des éléments de sol en forme de carreaux ont une plus petite dimension transversale près de la surface inférieure (23) qu'à un niveau supérieur, et dans lequel les nervures porteuses (25) ont une plus grande dimension transversale près de la surface inférieure (23) qu'à un niveau supérieur.

11. Revêtement de sol selon l'une quelconque des revendications précédentes, comprenant en outre des éléments d'accouplement (28, 29 ; 31, 32 ; 38, 39 ; 40) pour accoupler les éléments de sol (20) entre eux dans la direction horizontale.

12. Revêtement de sol selon l'une quelconque des revendications précédentes, pourvu en outre de particules de métal logées dans le matériau des éléments de sol, par exemple sous la forme de granulés, de fibres, de tiges, etc.

13. Revêtement de sol selon l'une quelconque des revendications précédentes, dans lequel les éléments de sol en forme de carreaux sont en outre pourvus d'une toile métallique (22) située entre les espaces de logement (21) et la surface supérieure (24).

14. Revêtement de sol selon l'une quelconque des revendications précédentes, dans lequel une couche aisément déformable (41), par exemple une couche en résine, est placée du côté inférieur des éléments de sol.

15. Revêtement de sol selon l'une quelconque des revendications précédentes, dans lequel les éléments de sol en forme de carreaux ont une structure ouverte dans le but de réaliser un drainage.
